# EUROPÄISCHE PATENTSCHRIFT

(11) **EP 4 069 621 B1**
(45) Veröffentlichungstag und Bekanntmachung des Hinweises auf die Patenterteilung: **03.01.2024**
(21) Anmeldenummer: 20811368.8
(22) Anmeldetag: 27.11.2020
(51) Int. Cl.: B66B 19/00, B66B 23/00

(54) **VERFAHREN ZUR ERRICHTUNG EINES TRAGWERKES EINER FAHRTREPPE ODER EINES FAHRSTEIGES**
METHOD FOR ERECTING A SUPPORT STRUCTURE OF AN ESCALATOR OR A MOVING WALKWAY
PROCÉDÉ DE CONSTRUCTION D'UNE MÉCANISME DE SUPPORT D'UN ESCALIER ROULANT OU D'UN TAPIS ROULANT

(30) Priorität: 05.12.2019 EP 19213941
(43) Veröffentlichungstag der Anmeldung: 12.10.2022
(73) Patentinhaber: INVENTIO AG, 6052 Hergiswil (CH)
(72) Erfinder: WAGENLEITNER, Georg, 4575 Roßleithen (AT); ZIMMERMANN, Gilbert, 6362 Stansstad (CH)
(74) Vertreter: Inventio AG
(86) Internationale Anmeldenummer: PCT/EP2020/083598
(87) Internationale Veröffentlichungsnummer: WO 2021/110549

(56) Entgegenhaltungen:
- NL-A- 2 017 088
- US-A1- 2019 134 753
- Dezeen: "Producing the world's first 3D-printed bridge with robots "is just the beginning" - Joris Laarman", YouTube, 13. Januar 2016 (2016-01-13), Seiten 1-1, XP054980537, Gefunden im Internet: URL:https://www.youtube.com/watch?v=SEaht2 tQ8P8 [gefunden am 2020-06-08]

## Beschreibung

Die Erfindung betrifft ein Verfahren zur Errichtung eines Tragwerkes einer als Fahrtreppe oder Fahrsteig ausgestalteten Personentransportanlage, sowie eine Personentransportanlage mit einem nach diesem Verfahren gefertigten Tragwerk.

Personentransportanlagen die als Fahrtreppen oder als Fahrsteige ausgestaltet sind, werden in Bauwerken des öffentlichen Bereichs wie beispielsweise in Bahnhöfen, U-Bahnhöfen, Flughäfen sowie in Shoppingmalls, Kulturzentren und dergleichen mehr, eingesetzt. Fahrtreppen oder Fahrsteige weisen eine tragende Struktur auf, die als Tragwerk bezeichnet wird. Meistens ist dieses Tragwerk eine aus zusammengeschweissten Metallprofilen bestehende Fachwerkkonstruktion, welche beim Hersteller als ganze Einheit oder in Tragwerkmodule unterteilt, hergestellt wird. Die Herstellung eines solchen Tragwerkes mit Hilfe einer Schweissroboteranlage wird beispielsweise in der US 2019/134753 A1 offenbart.

Das Tragwerk oder dessen Tragwerkmodule beziehungsweise Fachwerkmodule werden in ein Bauwerk eingebaut, wobei das Tragwerk zum Beispiel zwei Etagen des Bauwerkes verbindet. In diesem Tragwerk sind die bewegbaren Komponenten der Fahrtreppe oder des Fahrsteiges angeordnet, beispielsweise ein Stufenband oder ein Palettenband, umlaufende Handlaufriemen, Umlenkachsen, eine Antriebswelle sowie Teile des Antriebsmotors und Getriebes, und dergleichen mehr. Ferner werden auch feststehende Komponenten wie beispielsweise Balustraden, Kammplatten, Lagerstellen, Laufbahnen und Führungsschienen, eine Steuerung, Überwachungssysteme, Sicherheitssysteme und dergleichen mehr, mit dem Tragwerk fest verbunden. Wenn das Tragwerk in Tragwerkmodule unterteilt wird, bedeutet jede dadurch gebildete Trennstelle einen erheblichen Mehraufwand an Material, Fertigungszeit und Montagezeit. Deshalb werden Trennstellen möglichst vermieden oder deren Anzahl möglichst klein gehalten, was dazu führt, dass das Tragwerk oder dessen Tragwerkmodule üblicherweise sehr grosse Dimensionen aufweisen.

Fahrtreppen und Fahrsteige der vorgenannten Art oder deren Module sind deshalb grosse sperrige Teile, die aufgrund ihrer Struktur nicht beliebig zerlegt in ein Bauwerk eingebracht werden können. Wie vorangehend erwähnt, nimmt das Tragwerk sämtliche Bauteile der Fahrtreppe auf und stützt diese an zwei gegeneinander gerichteten Auflagerstellen im Bauwerk ab. Mit anderen Worten bedeutet dies, dass das Tragwerk sich über die gesamte geplante Länge der Personentransportanlage erstreckt.

Bei neu zu erstellenden Bauwerken werden üblicherweise während des Bauvorganges die Fahrtreppen und Fahrsteige, sobald deren bauwerkseitig erstellten Auflagerstellen vorhanden sind, eingesetzt und dann umschliessende Wände und Decken höherer Etagen weitergebaut. Dies deshalb, weil diese Personentransportanlagen aus den vorgenannten Gründen als sehr grosse Bauteile ins Bauwerk eingebaut werden und so gross sind, dass sie nur mit Schwierigkeit durch vorhandene Öffnungen ins Bauwerk eingebracht werden könnten.

Bei bestehenden Bauwerken jedoch fehlt diese Möglichkeit, eine grosse Fahrtreppe oder einen grossen Fahrsteig in das Bauwerk einzubringen, ohne an der Bauwerkhülle, beispielsweise an Wänden oder Decken, Teile auszubrechen und Öffnungen zu schaffen, um die grossen Bauteile einzuführen. Auch bei U-Bahnstationen kann dieses Problem vorhanden sein, weil dort Tunnel in den Untergrund geschlagen werden und in diesen Tunneln die Fahrtreppen und Fahrsteige installiert werden müssen.

Ein weiteres Problem besteht darin, solche Personentransportanlagen, die im Herstellerwerk komplett zusammengebaut und als Ganzes geliefert werden, zu transportieren. Hierbei müssen grosse Lastwagen eingesetzt werden, wobei das grosse Volumen dieser Anlagen dazu führen kann, dass während des Transportes auch Verkehrswege gesperrt und bestimmte Verkehrsbehinderungen in Kauf genommen werden müssen. Letztendlich führen diese Probleme zu sehr hohen Transport- und Installationskosten.

Um die vorangehend aufgeführten Probleme zu vermeiden, können Personentransportanlagen der vorgenannten Art in zerlegtem Zustand in das Bauwerk eingeführt und erst dort zusammengesetzt werden. Allerdings besteht hier das Problem, dass das üblicherweise als Fachwerk ausgeführte Tragwerk, welches der grösste Teil einer Fahrtreppe oder eines Fahrsteiges darstellt, nicht beliebig zerlegt werden kann. Auch wenn das Tragwerk in zwei oder drei Sektionen zerlegt angeliefert und ins Bauwerk verbracht wird, ist es dennoch möglich, dass dadurch gewisse Teile des Bauwerkes ausgebrochen werden müssen. Zudem stellt jede Schnittstelle des Tragwerks, an dem die Sektionen zusammengebaut werden, einen erheblichen Mehraufwand dar, da diese besonders verstärkt werden muss, damit die Schnittstelle dieselbe Tragfähigkeit aufweist wie die anderen Teile des Tragwerks.

Aufgrund dieser Probleme kann die Aufgabe der vorliegenden Erfindung darin gesehen werden, Möglichkeiten zu schaffen, ein Tragwerk in ein bestehendes Gebäude oder Bauwerk einzubringen, ohne dass Teile des Bauwerks ausgebrochen werden müssen oder dass das Tragwerk in Sektionen unterteilt ins Bauwerk eingebracht werden muss.

Diese Aufgabe wird gelöst durch ein Verfahren zur Errichtung eines Tragwerkes einer als Fahrtreppe oder Fahrsteig ausgestalteten Personentransportanlage. Das Verfahren zeichnet sich dadurch aus, dass das Tragwerk mittels einer 3D-Schweissroboteranlage zwischen zwei Auflagerstellen eines bestehenden Bauwerkes erstellt wird. Die 3D-Schweissroboteranlage weist hierzu mindestens eine Steuerung mit einer 3D-Robotersteuerungssoftware, eine Fahrvorrichtung mit einem 3D-Schweissroboter und eine Schweissgut-Zuführvorrichtung auf. Ein Bauteilmodell- Datensatz, der das zu errichtende Tragwerk digital abbildet, wird mittels der 3D-Robotersteuerungssoftware in Schweissoperationen umgesetzt. Diese sind durch den 3D-Schweissroboter während der Errichtungsphase des Tragwerkes durchzuführen, so dass während der Errichtungsphase mittels der 3D-Schweissroboteranlage das Tragwerk zwischen den beiden Auflagerstellen schweissgutauftragend erzeugt wird. Zudem werden bei der Erzeugung des Tragwerkes an diesem auch Befestigungsbereiche für weitere Bauteile der Personentransportanlage und/oder Bettungen für Führungsschienen-Einlagen mitausgebildet. Somit können äusserst präzise Schnittstellen zu den anzubauenden, weiteren Bauteile der Personentransportanlage geschaffen werden, die keine oder nur geringfügige Nacharbeit erfordern.

Als 3D-Schweissroboter können beispielsweise die bekannten Industrie-Schweissroboter verwendet werden, deren Auftrag-Schweissmodul um mehrere Achsen verschwenkt werden kann und der auf eine Fahrvorrichtung montiert wird. Das Auftrag-Schweissmodul trägt hierbei Schicht um Schicht Schweissgut auf, so dass sukzessive ein dreidimensionales Werkstück aus dem Schweissgut entsteht. Die Fahrvorrichtung dien dazu, den 3D-Schweissroboter zwischen den beiden Auflagerstellen geführt hin- und herzubewegen, beziehungsweise zu verfahren, da der 3D-Schweissroboter nur einen eingeschränkten Aktionsraum hat und die zu erzeugenden Tragwerke üblicherweise doch sehr lange Gebilde sind.

Mit anderen Worten kann eine vergleichsweise handliche, die vorangehend aufgeführten Komponenten aufweisende 3D-Schweissroboteranlage durch vorhandene Öffnungen in das Bauwerk eingebracht, und durch diese das Tragwerk der Personentransportanlage am dafür vorgesehenen Einbauort errichtet werden.

Um die Erzeugung zu vereinfachen, kann ein Startkörper als Teil des zu erstellenden Tragwerkes vorhanden sein, der zu Beginn der Errichtung des Tragwerkes an einer der beiden Auflagerstellen oder zwischen den beiden Auflagerstellen des bestehenden Bauwerkes angeordnet wird. Der Startkörper weist vorzugsweise dieselben Materialeigenschaften auf, wie das durch die 3D-Schweissroboteranlage aufzutragende Schweissgut. Als Materialien können die verschiedensten Metalle, insbesondere Stahl, aber auch andere geeignete, schweissbare Materialien wie beispielsweise hochfeste Kunststoffe verwendet werden. Der Startkörper kann beispielsweise eine ebene Platte, ein Profilstab, ein im Bauwerk eingelassener Träger, eine zwischen den beiden Auflagerstellen vorgesehene, verbleibende Stütze des Tragwerkes und dergleichen mehr sein. Der Startkörper lässt sich gut mit dem aufzutragenden Schweissgut stoffschlüssig verbinden. Der 3D-Schweissroboter trägt dann am Startkörper beginnend das Schweissgut auf und baut so das Tragwerk auf.

In einer Ausführung des Verfahrens können die während der Errichtungsphase zuerst entstehenden Konturen des Tragwerkes mittels einer Fixierungsvorrichtung am Bauwerk fixiert werden. Sofern ein Startkörper verwendet wird, kann vorzugsweise dieser mittels einer Fixierungsvorrichtung am Bauwerk fixiert werden. Dies hat den Vorteil, dass die durch das Verfahren bereits erzeugten Konturen des Fachwerkes mit dem Bauwerk temporär fest verbunden sind und somit für den Errichtungsvorgang eine stabile Basis haben. Damit können durch den 3D-Schweissroboter und durch überhängende Konturen des Tragwerkes verursachte Kräfte und Momente, die während der Errichtung auf das noch nicht fertiggestellte Tragwerk einwirken, wirkungsvoll am Bauwerk abgestützt werden. Sobald das Tragwerk fertiggestellt und durch die beiden Auflagerstellen stabil abgestützt ist, kann die Fixierungsvorrichtung, beziehungsweise können deren Teile entfernt werden.

In einer weiteren Ausführung des Verfahrens kann die 3D-Schweissroboteranlage einen 3D-Scanner und mindestens eine Referenzmarkierung umfassen. Mittels des 3D-Scanners lassen sich vor Beginn der Erstellung des Tragwerkes die exakten Konturen der Auflagerstellen und des Einbauraumes zwischen den beiden Auflagerstellen erfassen und ausgehend von diesen Ist- Daten gegebenenfalls bereits Korrekturen am digitalen-Bauteilmodell-Datensatz des Tragwerkes vornehmen. Die Referenzmarkierung ist vorzugsweise an einer der beiden Auflagerstellen angeordnet, wobei der 3D-Scanner die während der Errichtung geschaffenen Konturen des Tragwerkes zusammen mit der Referenzmarkierung kontinuierlich oder in diskreten Zeitintervallen erfasst und als Ist-Daten an die Steuerung weiterleitet. Mittels einer Verarbeitung der Ist-Daten in der Steuerung, können dann Korrekturen an den durch die 3D-Robotersteuerungssoftware vorgegebenen Schweissoperationen des 3D-Schweissroboters durchgeführt werden. Solche Korrekturen sind insbesondere dann erforderlich, wenn wie weiter unten beschrieben, die Fahrvorrichtung mit dem 3D-Schweissroboter nicht am entstehenden Tragwerk, sondern an einer von diesem getrennt angeordneten, temporär aufstellbaren Führungsvorrichtung geführt wird.

In einer weiteren Ausführung des Verfahrens kann die 3D-Schweissroboteranlage eine weitere Referenzmarkierung umfassen, die an der anderen der beiden Auflagerstellen angeordnet ist und welche weitere Referenzmarkierung durch den 3D-Scanner miterfasst wird. Das Miterfassen der zweiten Referenzmarkierung und natürlich deren Positionsauswertung kann die Präzision bei der Erfassung von Ist-Daten wesentlich erhöhen, da hierdurch eine genaue Positionierung des 3D-Scanners relativ zu nur einer Referenzmarke entfällt und die entstehenden Konturen des Tragwerkes mittels den gebräuchlichen Triangulationsalgorithmen als Punktkoordinaten errechnete Ist-Werte darstellen, die mit dem durch den digital abbildenden Bauteilmodell-Datensatz vorgegebenen Punkt-Koordinaten verglichen werden können.

In einer weiteren Ausführung des Verfahrens kann die 3D-Schweissroboteranlage eine temporär aufstellbare Führungsvorrichtung umfassen, die während der Erzeugung des Tragwerkes zwischen den beiden Auflagerstellen angeordnet ist und an der die Fahrvorrichtung geführt wird. Hierdurch wirken an den bereits erzeugten Konturen des Tragwerkes nur deren Eigenmasse, so dass belastungsbedingte Abweichungen nur sehr gering auftreten.

Alternativ dazu kann bei der Erzeugung des Tragwerkes an diesem auch eine Fahrbahn mitausgebildet werden, die zur Führung der Fahrvorrichtung dient. Diese Variante kann zum Beispiel bei sehr niedrigen Deckenhöhen angewandt werden, oder wenn keine geeigneten Anbindungspunkte am Bauwerk für die Führungsvorrichtung vorhanden sind, wie es bei Atrien oder Glasgebäuden der Fall sein kann.

Aufgrund des Auftrag-Schweissverfahrens, welches der 3D-Schweissroboter mit seinen Schweissoperationen umsetzt, kann die Oberfläche der hierdurch erzeugten Fahrbahn zu rau ausfallen, um die Fahrvorrichtung wirkungsvoll führen zu können. Es kann deshalb erforderlich sein, beispielsweise periodisch mittels Schleifoperationen die Fahrbahnflächen zu überschleifen. Alternativ können auch Führungsschienen-Einlagen wie beispielsweise Flachstahlprofile verwendet werden, die durch die Schweissoperationen kontinuierlich in das entstehende Tragwerk eingearbeitet werden. Gegebenenfalls kann diese Fahrbahn später auch zur Führung des Transportbandes der fertiggestellten Personentransportanlage verwendet werden.

In einer weiteren Ausführung des Verfahrens können bei der Erzeugung des Tragwerkes an diesem auch Aufnahmen für Spannelemente mitausgebildet werden. Die Spannelemente können überall dort vorgesehen werden, wo im fertigen Tragwerk Zugkräfte herrschen, wie beispielsweise im Bereich der Unterseite des Tragwerkes. Hierbei können die Aufnahmen zum Beispiel in den Bereichen der Auflagerstellen am Tragwerk ausgebildet werden. Zumindest nach der Erzeugung der Aufnahmen können die Spannelemente zwischen den Aufnahmen angeordnet und gespannt, beziehungsweise der zugehörende Bereich des Tragwerkes verspannt werden. Mit anderen Worten werden die auf Zug belasteten Bereiche des Tragwerkes durch die parallel dazu angeordneten Zugträger vorgespannt, so dass nach der Fertigstellung in diesen Bereichen des Tragwerkes zumindest reduzierte Zugkräfte herrschen.

In einer weiteren Ausführung des Verfahrens kann während der Erzeugung mittels Stützen und/oder Aufhängevorrichtungen der bereits erzeugte Abschnitt des Tragwerkes im Bauwerk abgestützt werden. Gegebenenfalls sind die Stützen oder Aufhängevorrichtungen an die sich kontinuierlich verändernde Masse des Tragwerkes während des Erzeugungsvorganges anpassbar, so dass keine Positionsverschiebung infolge zunehmender Masse der bereits erzeugten Konturen des Tragwerkes relativ zum Bauwerk, erfolgt.

Die Stützen und/oder Aufhängevorrichtungen können hierbei als integraler Bestandteil des fertiggestellten Tragwerkes durch den 3D-Schweissroboter erzeugt werden oder als Zusatzkomponenten bereitgestellt, durch den 3D-Schweissroboter mit dem bereits erzeugten Abschnitt des Tragwerkes stoffschlüssig verbunden werden. Selbstverständlich können die Stützen und/oder Aufhängevorrichtungen auch nur temporär zur Abstützung der bereits erzeugten Bereiche des Tragwerkes eingesetzt werden, in dem diese nach der Fertigstellung des Tragwerkes, welches ja dann über die beiden Auflagerstellen des Bauwerkes abgestützt ist, wieder entfernt werden. Wenn das erzeugte Tragwerk eine besonders lange Spannweite zwischen den beiden Auflagerstellen aufweist, kann selbstverständlich eine oder mehrere der Stützen belassen werden. Diese sind vorzugsweise als Loslagerstellen ausgestaltet, so dass Bewegungen zwischen verschiedenen Etagen des Bauwerkes, wie sie beispielsweise durch Erdbeben entstehen können, vom Tragwerk entkoppelt werden. In seltenen Fällen kann es aber auch erwünscht sein, wenn das Tragwerk die Steifigkeit des umgebenden Bauwerkes erhöht. Hierzu kann das Tragwerk an den Auflagerstellen und gegebenenfalls auch über zusätzliche Stützen starr mit dem Bauwerk verbunden sein. In diesem Falle sind Auflagerstellen mit einem freigelegten Träger aus mit dem Schweissgut verbindbarem Material besonders vorteilhaft, der wie weiter oben bereits erwähnt, als Startkörper dienen kann.

In einer weiteren Ausführung des Verfahrens kann mittels der 3D-Schweissroboteranlage auch «nur» ein als Metallbewehrung ausgebildetes Tragwerk erzeugt werden. Mit anderen Worten werden durch den 3D-Schweissroboter nur diejenigen Konturen des Tragwerkes aus Metall erzeugt, welche Zugkräfte oder Biegemomente aufnehmen müssen, sowie solche Konturen, die zur temporären Stabilisierung des hernach aufzutragenden, verarbeitbaren Betons erforderlich sind. Auch Schnittstellen des Tragwerkes zum Bauwerk wie beispielsweise in den Auflagerstellen abstützende Auflagerwinkel oder Stützen können Teil dieses als Metallbewehrung ausgebildetes Tragwerk sein. Die als Metallbewehrung dienenden Bereiche des Tragwerkes werden anschliessend mit einer Betonmasse zumindest teilweise umschlossen. Diese Fertigung erfordert zwar zwei Fertigungsdurchgänge, das heisst, den ersten, um die Metallbewehrung zu erstellen und den zweiten, um die verarbeitbare Betonmasse aufzutragen, aber sie dahingehend vorteilhaft, weil die Fertigungskosten aufgrund des teilweisen Ersatzes von Schweissgut durch Beton, deutlich reduziert werden können.

Diese beiden Fertigungsschritte können durch nahezu dieselbe Fertigungsausrüstung durchgeführt werden, indem am 3D-Schweissroboter das Auftrag-Schweissmodul durch ein Beton-Druckermodul ersetzt wird und mittels des Beton-Druckermoduls verarbeitbare Betonmasse die Metallbewehrung zumindest teilweise umschliessend, am Tragwerk angeordnet wird.

In einer weiteren Ausführung des Verfahrens kann das durch den Bauteilmodell-Datensatz digital abgebildete Tragwerk hinsichtlich seiner Festigkeit, Masse und Gestaltung unter Einsatz einer 3D- Finite-Elemente-Methode mit Berücksichtigung eines Biomimicry-Ansatzes in seiner Topologie optimiert werden. Biomimicry ist hierbei die Nachahmung der Modelle, Systeme und Elemente der Natur zum Zweck der Lösung komplexer technischer Probleme. Für die Erzeugung eines Tragwerkes bedeutet dies, dass nur dort das Auftragen von Material vorgesehen wird, wo es tatsächlich tragende Funktion übernehmen muss. Somit können beispielsweise Träger, Obergurte und Untergurte des Tragwerkes innere Strukturen aufweisen, wie sie zum Beispiel von Knochen bekannt sind.

Das durch die vorangehend beschriebenen Verfahren erzeugte Tragwerk kann nach seiner Fertigstellung mit bewegbaren Komponenten wie beispielsweise einem Stufenband oder einem Palettenband, Umlenkachsen, einer Antriebswelle, einem Antriebsmotor mit Getriebe, umlaufende Handlaufriemen, Führungsrollen und dergleichen mehr, sowie mit statischen beziehungsweise feststehenden Komponenten wie beispielsweise Balustraden, Kammplatten, Lagerstellen, Laufbahnen und Führungsschienen, einer Steuerung, Überwachungssystemen, Sicherheitssystemen Balustraden Verkleidungsteilen und dergleichen mehr, zur fertigen Personentransportanlage komplettiert werden. Je nach Konfiguration kann diese Personentransportanlage als Fahrtreppe oder Fahrsteig ausgestaltet sein.

Nachfolgend werden Ausführungsformen der Erfindung unter Bezugnahme auf die beigefügten Zeichnungen beschrieben, wobei weder die Zeichnungen noch die Beschreibung als die Erfindung einschränkend, auszulegen sind. Ferner werden für gleiche oder gleichartig wirkende Elemente dieselben Bezugszeichen verwendet. Es zeigen:
Figur 1: schematisch eine 3D-Schweissroboteranlage in einer ersten Ausführung mit einer Führungsvorrichtung, einem 3D-Schweissroboter und einer Schweissgut-Zuführvorrichtung,
Figur 2: schematisch eine 3D-Schweissroboteranlage in einer zweiten Ausführung, durch die eine Metallbewehrung erzeugt wurde und deren Auftrag-Schweissmodul durch ein Beton-Druckermodul ersetzt wurde, um auf die Metallbewehrung eine verarbeitbare Betonmasse aufzutragen;
Figur 3: schematisch ein Querschnitt durch das in der Figur 1 dargestellte Tragwerk;
Figur 4: schematisch eine Weiterbildung der in der Figur 1 dargestellten 3D-Schweissroboteranlage.

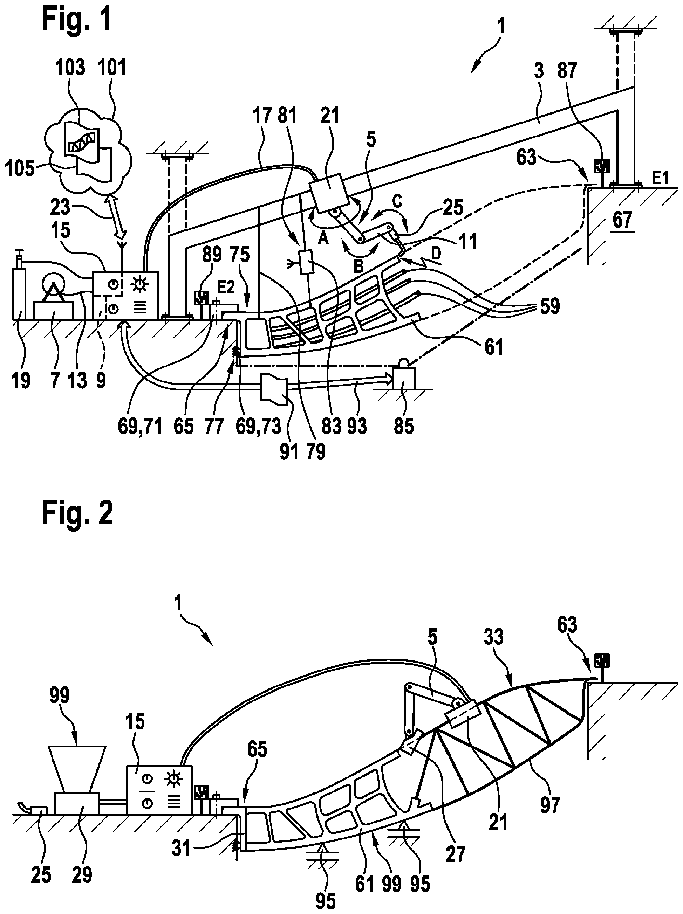

In der Figur 1 ist schematisch eine 3D-Schweissroboteranlage 1 in einer ersten Ausführung mit einer Führungsvorrichtung 3, einem 3D-Schweissroboter 5 und einer Schweissgut-Zuführvorrichtung 7 dargestellt. Mittels dieser 3D-Schweissroboteranlage 1 kann zwischen zwei Auflagerstellen 63, 65 eines bestehenden Bauwerkes 67, ein Tragwerk 61 erstellt werden. Die Auflagerstellen 63, 65 sind in zwei vertikal voneinander beabstandeten Etagen E1, E2 des bestehenden Bauwerkes 67 ausgebildet.

Damit das Tragwerk 6 erstellt werden kann, weist die 3D-Schweissroboteranlage 1 zudem mindestens eine Steuerung 9 mit einer 3D-Robotersteuerungssoftware 105 auf. Die Steuerung 9 ist in einem Versorgungsmodul 15 der 3D-Schweissroboteranlage integriert, welches Versorgungsmodul 15 über eine Versorgungsleitung 17 mit dem 3D-Schweissroboter 5 verbunden ist. Über diese Versorgungsleitung 17 können dem 3D-Schweissroboter 5 Steuerbefehle der Steuerung 9, Energie zum Schweissen, Energie zum Bewegen des angesteuerten 3D-Schweissroboters 5, sowie Schweissgut 13 und gegebenenfalls auch ein Schutzgas 19 zugeführt werden.

Da der 3D-Schweissroboter 5 mit seinem Roboterarm 11 nur einen begrenzten Raum erreichen kann, ist der 3D-Schweissroboter 5 auf einer Fahrvorrichtung 21 montiert, die passiv, also beispielsweise von Hand in diskreten Schritten zwischen den beiden Auflagerstellen 63, 65 verschoben werden kann. Vorzugsweise ist die Fahrvorrichtung 21 aber aktiv beziehungsweise motorisiert ausgestaltet, wobei deren Fahrbewegungen ebenfalls von der Steuerung 9 gesteuert werden können. Die Fahrvorrichtung 21 des vorliegenden Ausführungsbeispiels ist an der Führungsvorrichtung 3 geführt. Die Führungsvorrichtung 3 ist zu diesem Zweck zwischen den Etagen E1 und E2 temporär angeordnet und stützt dort im Bereich der Auflagerstellen 63, 65 an diesen ab. Wie durch die unterbrochenen Linien angedeutet, kann die Führungsvorrichtung 3 auch zwischen Böden und Decken des bestehenden Bauwerkes 67 verspannt werden, um eine möglichst starre und ortsstabile Führung für die Fahrvorrichtung 21 zu erhalten.

Das zu errichtende Tragwerk 61 ist vorzugsweise durch einen digitalen Bauteilmodell-Datensatz 103 abgebildet beziehungsweise definiert. Dies kann beispielsweise ein dreidimensionaler CAD- Datensatz des Tragwerkes 61 sein, der alle Konturen und zwar sowohl innere wie äussere Konturen definiert. Der Bauteilmodell-Datensatz 103 kann beispielsweise in der Steuerung 9 eingespeichert sein. Wesentlich vorteilhafter ist jedoch, wenn wie in der Figur 1 durch den Doppelpfeil 23 dargestellt, der digitale Bauteilmodell-Datensatz 103 beispielsweise aus einer Datenwolke (Cloud) 101 in die Steuerung 9 geladen werden kann. Mittels der 3D-Robotersteuerungssoftware 105, die ebenfalls in der Datenwolke 101 gespeichert sein kann, kann der digitale Bauteilmodell-Datensatz 103 in Schweissoperationen A, B, C, D (d.h. Bewegungen des Roboterarms 11, der Schweisseinsatz des am Roboterarm 11 angeordneten Auftrag-Schweissmoduls 25 sowie die Zuführungsmenge des Schweissgutes 13) umgesetzt werden, die durch den 3D-Schweissroboter 5 während der Errichtungsphase des Tragwerkes 61 durchzuführen sind. Somit wird während der Errichtungsphase mittels der 3D-Schweissroboteranlage 1 das Tragwerk 61 zwischen den beiden Auflagerstellen 63, 65 schweissgutauftragend erzeugt.

Da sich aufgrund dieses Fertigungsverfahrens des Tragwerkes 61 lokale Ungleichgewichte nicht vermeiden lassen, kann der während der Errichtungsphase zuerst entstehende Abschnitt des Tragwerkes 61 mittels einer Fixierungsvorrichtung 69 am Bauwerk 67 fixiert werden. Die Fixierungsvorrichtung 69 des vorliegenden Beispiels umfasst eine Klemmpratze 71, mit welcher ein durch die bereits ausgeführten Schweissoperationen erstellter Auflagerwinkel 75 des Tragwerkes 61 in der Ebene E2 an der Auflagerstelle 65 festgeklemmt wird. Des Weiteren umfasst die Fixiervorrichtung 69 ein Stützlager 73, welches eine Unterkante 77 des Tragwerkes 61 gegen das Bauwerk 67 abstützt. Die Fixierungsvorrichtung 69 verhindert insbesondere Relativbewegungen zwischen dem entstehenden Tragwerk 61 und dem Bauwerk 67, so dass hieraus keine negativen Rückwirkungen auf den Errichtungsprozess entstehen können. Sobald das Tragwerk 61 vollständig errichtet ist und an beiden Auflagerstellen 63, 65 abgestützt wird, können die Teile der Fixierungsvorrichtung 69 entfernt werden.

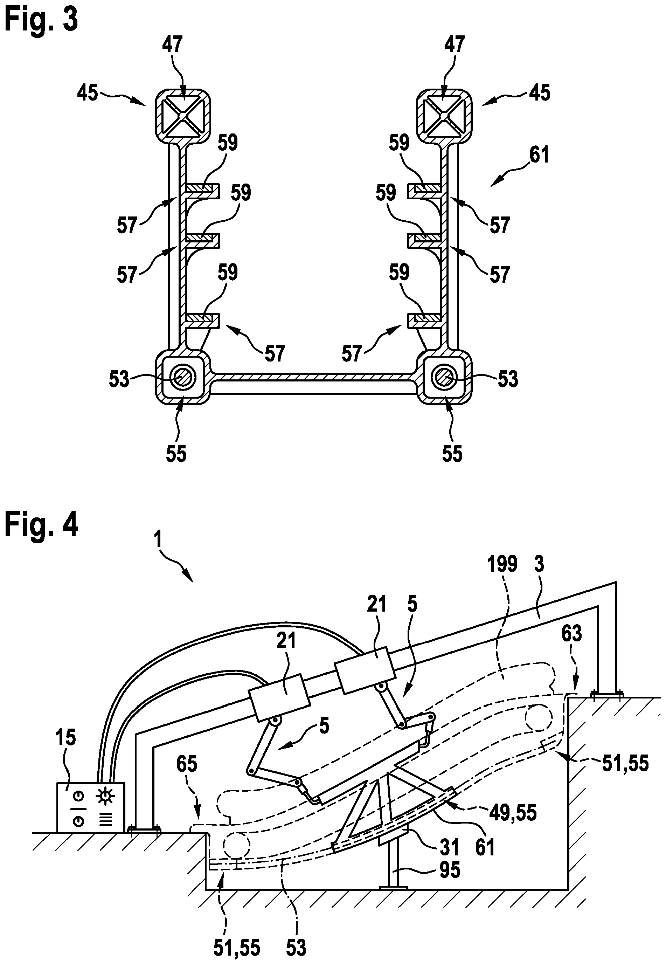

Wie in der Figur 1 dargestellt, kann das zunehmend wachsende Tragwerk 61 während der Erzeugung auch mittels Aufhängevorrichtungen 79, 81 im Bauwerk 67 abgestützt werden, die zwischen den beiden Auflagerstellen 63, 65 angeordnet sind. Des Weiteren sind auch Stützen 95 möglich, wie dies in den Figuren 2 und 4 dargestellt ist.

In Figur 1 ist zum einen eine passive Aufhängevorrichtung 79 dargestellt, die die Gewichtskraft des zunehmend wachsenden Tragwerkes 61, im vorliegenden Beispiel über die Führungsvorrichtung 3, am Bauwerk 67 abstützt. Parallel zu dieser ist eine aktive Aufhängevorrichtung 81 vorhanden, deren Länge mittels eines Seilzugapparates 83 variiert werden kann. Der Seilzugapparat 83 ist hierzu über eine Funkverbindung mit der Steuerung 9 verbunden. In einer möglichen Ausgestaltung übermittelt der aktive Seilzugapparat 83 kontinuierlich die Zugkraft in der aktiven Aufhängevorrichtung 81an die Steuerung 9, welche daraus eine Lagekorrektur errechnet und an den Seilzugapparat 83 übermittelt, der diese dann durch eine Verkürzung der Abspannlänge der aktiven Aufhängevorrichtung 81 umsetzt.

Es ist noch anzumerken, dass die Aufhängevorrichtungen 79, 81 und insbesondere verbleibende Stützen 95, wie sie in Figur 2 dargestellt sind, auch als integraler Bestandteil des fertiggestellten Tragwerkes 61 durch den 3D-Schweissroboter 5 erzeugt werden können, oder als Zusatzkomponenten bereitgestellt, durch den 3D-Schweissroboter 5 mit dem bereits erzeugten Abschnitt des Tragwerkes 61 stoffschlüssig verbunden werden können.

Ferner kann die 3D-Schweissroboteranlage 1 auch einen 3D-Scanner 85 und mindestens eine Referenzmarkierung 87 umfassen. Mittels des 3D-Scanners 85 lassen sich vor Beginn der Erstellung des Tragwerkes 61 die exakten Konturen der Auflagerstellen 63, 65 und des Einbauraumes zwischen den beiden Auflagerstellen 63, 65 erfassen und ausgehend von diesen Ist- Daten, gegebenenfalls bereits Korrekturen am digitalen-Bauteilmodell-Datensatz 103 des Tragwerkes 61 vornehmen.

Die Referenzmarkierung 87 ist vorzugsweise an einer der beiden Auflagerstellen 63, 65 angeordnet, wobei der 3D-Scanner 85 kontinuierlich oder in diskreten Zeitintervallen die während der Errichtung geschaffenen Konturen des Tragwerkes 61 zusammen mit der Referenzmarkierung 85 erfasst und als Ist-Daten 91 über eine Signalverbindung 93 (symbolisch mit einem Doppelpfeil dargestellt) an die Steuerung 9 weiterleitet. Als 3D-Scanner 85 können gebräuchlichen Erfassungsgeräte wie Laserscanner, TOF-Kameras etc. verwendet werden. Als Referenzmarkierungen 85 können alle bekannten Mittel wie reflektierende und mit einem Muster versehene Platten, Funksender und dergleichen mehr, verwendet werden. Mittels einer Verarbeitung der Ist-Daten 91 in der Steuerung 9, können Korrekturen an den durch die 3D-Robotersteuerungssoftware 105 vorgegebenen Schweissoperationen A, B, C, D, insbesondere an den Bewegungen des 3D-Schweissroboters 5 und der Fahrvorrichtung 21, durchgeführt werden. Selbstverständlich können die Ist-Daten 91 auch dazu verwendet werden, die obengenannten Lagekorrekturen der aktiven Aufhängevorrichtung 81 zu errechnen.

Um eine noch präzisere Erfassung der entstehenden Konturen des Tragwerkes 61 relativ zum bestehenden Bauwerk 67 zu ermöglichen, kann eine weitere Referenzmarkierung 89 an der anderen der beiden Auflagerstellen 65 angeordnet sein. Diese weitere Referenzmarkierung 89 wird ebenfalls durch den 3D-Scanner 85 miterfasst. Die so gewonnenen Ist-Daten 91 können mit Triangulationsalgorithmen bearbeitet, und daraus eine, die Konturen des entstehenden Tragwerkes 61 im dreidimensionalen Raum widergebende Punktewolke erzeugt werden. Die Daten dieser Punktewolke können mit dem Bauteilmodell-Datensatz 103 verglichen werden und Abweichungen davon in eine Korrektur der Schweissoperationen A, B, C, D, umgesetzt werden. Nach der Fertigstellung des Tragwerkes 61 können die Ist-Daten 91 in den digitalen Bauteilmodell-Datensatz 103 übernommen werden.

Figur 2 zeigt schematisch eine 3D-Schweissroboteranlage 1 in einer zweiten Ausführung. Diese erstellt ein Tragwerk 61 im Wesentlichen in zwei Arbeitsdurchgängen. Im ersten Arbeitsdurchgang wurde durch die 3D-Schweissroboteranlage 1 eine Metallbewehrung 97 in gleicher Art und Weise erzeugt, wie das Tragwerk 61 der Figur 1. Jedoch weist die die Metallbewehrung 97 zu wenig Festigkeit, insbesondere Druckfestigkeit auf, um die weiteren Komponenten einer Personentransportanlage 199 (siehe Figur 4) zu tragen. Um diese Festigkeit letztendlich zu erreichen, wurde vor dem zweiten Arbeitsdurchgang das Auftrag-Schweissmodul 25 des 3D-Schweissroboters 5 durch ein Beton-Druckermodul 27 ersetzt, um wie dargestellt, auf die Metallbewehrung 97 eine verarbeitbare Betonmasse 99 aufzutragen. Zu diesem Zweck wird auch die Schweissgut-Zufuhrvorrichtung 7 durch eine Beton-Zufuhrvorrichtung 29 ersetzt, die ebenfalls über das Versorgungsmodul 15 dem Beton-Druckermodul 27 die verarbeitbare Betonmasse 99 zuführt.

Mit anderen Worten wird mittels der 3D-Schweissroboteranlage 1 ein als Metallbewehrung 97 ausgebildetes Tragwerk 61 erzeugt und dessen als Metallbewehrung 97 dienende Bereiche mit der Betonmasse 99 zumindest teilweise umschlossen. Sobald die Betonmasse 99 abgebunden hat, ist das Tragwerk 61 bereit, um die übrigen, nicht dargestellten Komponenten der Personentransportanlage 199 (siehe Figur 4) aufzunehmen.

Die Figur 2 zeigt zudem eine von der Figur 1 abweichende Führung der Fahrvorrichtung 21. Bei der Erzeugung der Metallbewehrung 97 wurde an dieser auch eine Fahrbahn 33 mitausgebildet, die zur Führung der Fahrvorrichtung 21 dient. Hierdurch entfällt die in der Figur 1 dargestellte Führungsvorrichtung 3, jedoch müssen beispielsweise Stützen 95 vorgesehen werden, die das Tragwerk 61 während seiner Errichtung im Bauwerk 67 räumlich stabilisieren beziehungsweise fixieren. Selbstverständlich kann auch an einem alleine durch Auftrag-Schweissen erzeugtes Fachwerk 61, eine solche Fahrbahn 33 zur Führung der Fahrvorrichtung 21 ausgebildet werden.

Um die Erzeugung zu vereinfachen, kann zudem ein Startkörper 31 als Teil des zu erstellenden Tragwerkes 61 vorhanden sein, der zu Beginn der Errichtung des Tragwerkes 61 wie in der Figur 2 dargestellt, an einer der beiden Auflagerstellen 63, 65 oder wie in der Figur 4 dargestellt, zwischen den beiden Auflagerstellen 63, 65 des bestehenden Bauwerkes 67 angeordnet wird. Der Startkörper 31 weist vorzugsweise dieselben Materialeigenschaften auf, wie das durch die 3D-Schweissroboteranlage 1 aufzutragende Schweissgut 13. Als Materialien können die verschiedensten Metalle, insbesondere Stahl, aber auch andere, geeignete, schweissbare Materialien wie beispielsweise hochfeste Kunststoffe verwendet werden. Der Startkörper 31 lässt sich somit gut mit dem aufzutragenden Schweissgut 13 stoffschlüssig verbinden. Der Startkörper 31 kann beispielsweise eine ebene Platte, ein Profilstab, ein im bestehenden Bauwerk 67 eingelassener Träger, eine zwischen den beiden Auflagerstellen 63, 65 vorgesehene, verbleibende Stütze des Tragwerkes 61 und dergleichen mehr sein. Der 3D-Schweissroboter 5 trägt dann am Startkörper 31 beginnend das Schweissgut 13 auf und baut so das Tragwerk 61 auf.

Die Figur 3 zeigt schematisch einen Querschnitt durch das in der Figur 1 dargestellte Tragwerk 61. Gut erkennbar sind hier die bei der Erzeugung des Tragwerkes 61 an diesem mitausgebildeten Befestigungsbereiche 57 für weitere Bauteile der Personentransportanlage 199. Im vorliegenden Beispiel dienen die Befestigungsbereiche 57 der Aufnahme von Führungsschienen-Einlagen 59 (siehe auch Figur 1). Selbstverständlich können die Führungsschienen-Einlagen 59 auch während der Errichtung des Tragwerkes 61 kontinuierlich eingelegt und gegebenenfalls direkt unter Zuführung von Schweissgut 13 eingeschweisst werden. Diese könnten dann auch als Fahrbahn 33 für die Fahrvorrichtung 21 dienen.

Wie die Figuren 3 und 4 ferner zeigen, können bei der Erzeugung des Tragwerkes 61 an diesem auch Aufnahmen 55 für Spannelemente 53 mitausgebildet werden. Solche Spannelemente 53 können beispielsweise Stahlseile, Stahldrähte, Stahlstangen und dergleichen mehr sein, die an ihren Enden beispielsweise Spannarmaturen mit Gewindeansätzen aufweisen, damit diese in Analogie zu Spannbetonkonstruktionen, zumindest nach der Erzeugung der Aufnahmen 55 zwischen den Aufnahmen 55 angeordnet und gespannt werden können. Ein Teil der Aufnahmen dient hierbei als Ankerstellen 51, andere als Spannelement-Führung 49.

Wie bereits in Zusammenhang mit der Figur 1 erwähnt, wird das zu errichtende Tragwerk 61 beziehungsweise dessen Konturen und innere Struktur durch einen digitalen Bauteilmodell- Datensatz 103 definiert. Dieser digitale Bauteilmodell- Datensatz 103 des Tragwerkes 61 kann hinsichtlich Festigkeit, Masse und Gestaltung unter Einsatz einer 3D- Finite-Elemente-Methode mit Berücksichtigung eines Biomimicry-Ansatzes in seiner Topologie optimiert werden. Hierdurch können automatisiert auch innere Strukturen 47 definiert werden, die nur mit dem erfindungsgemässen Verfahren erzeugbar sind. Die in der Figur 3 dargestellten, in den Obergurten 45 des Tragwerkes 61ausgebildeten inneren Strukturen 47 sind nur beispielhaft zu verstehen. In tatsächlicher Ausführung sind diese Strukturen 47 durch den Einsatz der 3D- Finite-Elemente-Methode unter Berücksichtigung des Biomimicry-Ansatzes nach den dort auftretenden Zug-, Druck-, Biege- und Torsions-Spannungen ausgelegt.

Die Figur 4 zeigt schematisch eine mögliche Weiterbildung der in der Figur 1 dargestellten 3D-Schweissroboteranlage 1. Bei dieser Variante werden zwei 3D-Schweissroboter 5 mit den ihnen zugeordneten Fahrvorrichtungen 21 an der Führungsvorrichtung 3 geführt. Beide 3D-Schweissroboter 5 werden hierbei vom selben Versorgungsmodul 15 versorgt. Als Startkörper 31 dient eine verbleibende Stütze 95, die zwischen den beiden Auflagerstellen 63, 65 des bestehenden Bauwerkes 67 angeordnet ist. Diese Weiterbildung ermöglicht nicht nur eine Halbierung der Fertigungszeit, sondern auch eine statisch ausbalancierte Errichtung des Tragwerks 61, so dass der Einsatz von nicht dargestellten Aufhängevorrichtungen 79, 81 und Fixierungsvorrichtungen 69 minimiert werden kann. Wie bereits weiter oben erwähnt, sind in der Figur 4 die als Ankerstellen 51 und Spannelement-Führungen 49 ausgebildete Aufnahmen 55 für ein Spannelement 53 ebenfalls dargestellt.

Sobald das Tragwerk 61 durch das erfindungsgemässe Verfahren errichtet ist, müssen gegebenenfalls gewisse Konturen wie Befestigungsebereiche, Aufnahmen und dergleichen mehr, durch ergänzende Fertigungsmethoden wie Schleifen, Fräsen und Bohren nachbearbeitet werden. Danach können wie durch die unterbrochenen Linien schemenhaft dargestellt, weitere statische und bewegbare Komponenten der als Fahrtreppe oder Fahrsteig ausgestalteten Personentransportanlage 199 in und an das fertiggestellte Tragwerk 61 montiert werden. Anschliessend kann die komplettierte Personentransportanlage 199 in Betrieb genommen werden.

Obwohl die Figuren 1 bis 4 unterschiedliche Aspekte der vorliegenden Erfindung anhand eines zu erstellenden Tragwerkes 61 zeigen, welches vertikal voneinander beabstandete Etagen E1, E2 miteinander verbinden soll, ist es offensichtlich, dass die beschriebenen Verfahrensschritte und eine entsprechende Vorrichtung gleichermaßen auch für auf einer Ebene anzuordnende Tagwerke 61 Anwendung finden, wie sie beispielsweise für Fahrsteige verwendet werden. Zudem kann das Beton-Druckmodul 27 weitere Funktionseinheiten wie beispielsweise eine Vorrichtung zum Glätten von Oberflächen aufweisen, mittels der der die Oberflächen der noch nicht abgebundenen, verarbeiteten Betonmasse 99 des Tragwerkes 61 bearbeitet werden können. Um das geschweisste Tragwerk 61 vor Korrosion zu schützen, kann nach der Fertigstellung der Metall-Fachwerksstruktur das Schweissmodul 25 durch ein nicht dargestelltes Spritzmodul ersetzt werden. Dieses Spritzmodul kann eine präzise und gleichmäßige Oberflächenbeschichtung auftragen, die je nach Anforderungen ein- oder mehrlagig ausgeführt sein kann.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zur Errichtung eines Tragwerkes (61) einer als Fahrtreppe oder Fahrsteig ausgestalteten Personentransportanlage (199), wobei das Tragwerk (61) mittels einer 3D-Schweissroboteranlage (1) zwischen zwei Auflagerstellen (63, 65) eines bestehenden Bauwerkes (67) erstellt wird, wobei die 3D-Schweissroboteranlage (1) mindestens eine Steuerung (9) mit einer 3D-Robotersteuerungssoftware (105), eine Fahrvorrichtung (21) mit einem 3D-Schweissroboter (5) und eine Schweissgut-Zufuhrvorrichtung (7) aufweist, **dadurch gekennzeichnet, dass** ein das zu errichtende Tragwerk (61) digital abbildender Bauteilmodell-Datensatz (103) mittels der 3D-Robotersteuerungssoftware (105) in Schweissoperationen (A, B, C, D) umgesetzt wird, die durch den 3D-Schweissroboter (5) während der Errichtungsphase des Tragwerkes (61) durchzuführen sind, wobei während der Errichtungsphase mittels der 3D-Schweissroboteranlage (1) das Tragwerk (61) zwischen den beiden Auflagerstellen (63, 65) schweissgutauftragend erzeugt wird, und wobei bei der Erzeugung des Tragwerkes (61) an diesem auch Befestigungsbereiche (57) für weitere Bauteile der Personentransportanlage (199) und/oder Bettungen für Führungsschienen-Einlagen (59) mitausgebildet werden.

2. Verfahren nach Anspruch 1, wobei ein Startkörper (31) als Teil des zu erstellenden Tragwerkes (61) vorhanden ist, der zu Beginn der Errichtung des Tragwerkes (61) an einer der beiden Auflagerstellen (63, 65) oder zwischen den beiden Auflagerstellen (63, 65) des bestehenden Bauwerkes (67) angeordnet wird und wobei der 3D-Schweissroboter (5) am Startkörper (31) beginnend, das Tragwerk (61) aufbaut.

3. Verfahren nach Anspruch 1 oder 2, wobei der während der Errichtungsphase zuerst entstehende Abschnitt des Tragwerkes (61) mittels einer Fixierungsvorrichtung (69) am Bauwerk (67) fixiert wird.

4. Verfahren nach einem der Ansprüche 1 bis 3, wobei die 3D-Schweissroboteranlage (1) einen 3D-Scanner (85) und mindestens eine Referenzmarkierung (87) umfasst, welche Referenzmarkierung (87) an einer der beiden Auflagerstellen (63, 65) angeordnet ist, wobei der 3D-Scanner (85) kontinuierlich oder in diskreten Zeitintervallen, die während der Errichtung geschaffenen Konturen des Tragwerkes (61) zusammen mit der Referenzmarkierung (87) erfasst und als Ist-Daten (91) an die Steuerung (9) weiterleitet, und wobei mittels einer Verarbeitung der Ist-Daten (91) in der Steuerung (9) Korrekturen an den durch die 3D-Robotersteuerungssoftware (105) vorgegebenen Schweissoperationen (A, B, C, D) des 3D-Schweissroboters (5) durchgeführt werden können.

5. Verfahren nach Anspruch 4, wobei eine weitere Referenzmarkierung (87) an der anderen der beiden Auflagerstellen (63, 65) angeordnet ist und die weitere Referenzmarkierung (87) durch den 3D-Scanner (85) miterfasst wird.

6. Verfahren nach einem der Ansprüche 1 bis 5, wobei die 3D-Schweissroboteranlage (1) eine temporär aufstellbare Führungsvorrichtung (3) umfasst, die während der Erzeugung des Tragwerkes (61) zwischen den beiden Auflagerstellen (63, 65) angeordnet ist und an der die Fahrvorrichtung (21) geführt wird.

7. Verfahren nach einem der Ansprüche 1 bis 5, wobei bei der Erzeugung des Tragwerkes (61) an diesem auch eine Fahrbahn (33) mitausgebildet wird, die zur Führung der Fahrvorrichtung (21) dient.

8. Verfahren nach einem der Ansprüche 1 bis 7, wobei bei der Erzeugung des Tragwerkes (61) an diesem auch Aufnahmen (55) für Spannelemente (53) mitausgebildet werden und zumindest nach der Erzeugung der Aufnahmen (55) die Spannelemente (53) zwischen den Aufnahmen (55) angeordnet und gespannt werden.

9. Verfahren nach einem der Ansprüche 1 bis 8, wobei während der Erzeugung mittels Stützen (95) und/oder Aufhängevorrichtungen (79, 81) der bereits erzeugte Abschnitt des Tragwerkes (61) im Bauwerk (67) abgestützt wird.

10. Verfahren nach Anspruch 9, wobei die Stützen (95) und/oder Aufhängevorrichtungen (79, 81) als integraler Bestandteil des fertiggestellten Tragwerkes (61) durch den 3D-Schweissroboter (5) erzeugt werden oder als Zusatzkomponenten bereitgestellt, durch den 3D-Schweissroboter (5) mit dem bereits erzeugten Abschnitt des Tragwerkes (61) stoffschlüssig verbunden werden.

11. Verfahren nach einem der Ansprüche 1 bis 10, wobei mittels der 3D-Schweissroboteranlage (1) ein als Metallbewehrung (97) ausgebildetes Tragwerk (61) erzeugt wird und dessen als Metallbewehrung (79) dienende Bereiche mit einer Betonmasse (99) zumindest teilweise umschlossen werden.

12. Verfahren nach Anspruch 11, wobei am 3D-Schweissroboter (5) ein Auftrag-Schweissmodul (25) durch ein Beton-Druckermodul (27) ersetzt wird und mittels des Beton-Druckermoduls (27) verarbeitbare Betonmasse (99) die Metallbewehrung (97) zumindest teilweise umschliessend, am Tragwerk (61) angeordnet wird.

13. Verfahren nach einem der Ansprüche 1 bis 12, wobei das durch den Bauteilmodell-Datensatz (103) digital abgebildete Tragwerk (61) hinsichtlich seiner Festigkeit, Masse und Gestaltung unter Einsatz einer 3D- Finite-Elemente-Methode mit Berücksichtigung eines Biomimicry-Ansatzes in seiner Topologie optimiert wird.

14. Personentransportanlage (199) die als Fahrtreppe oder Fahrsteig ausgestaltet ist, **dadurch gekennzeichnet, dass** diese ein nach einem Verfahren 1 bis 13 gefertigtes Tragwerk (61) sowie weitere, in diesem Tragwerk (61) statisch oder bewegbar angeordnete Komponenten der Personentransportanlage (199) aufweist.

## Claims

1. Method for erecting a supporting structure (61) of a passenger transport system (199) configured as an escalator or moving walkway, wherein the supporting structure (61) is constructed between two support points (63, 65) of an existing structure (67) by means of a 3D welding robot system (1), the 3D welding robot system (1) having at least one controller (9) comprising a 3D robot control software (105), a traveling device (21) having a 3D welding robot (5), and a welding material feed device (7), **characterized in, that** a component model data set (103) which digitally represent the supporting structure (61) to be erected being converted into welding operations (A, B, C, D) by means of the 3D robot control software (105), which welding operations are to be carried out by the 3D welding robot (5) during the erection phase of the supporting structure (61), the supporting structure (61) being produced between the two support points (63, 65) by means of the 3D welding robot system (1) by depositing welding material during the erection phase, and fastening regions (57) for further components of the passenger transport system (199) and/or bedding for guide rail inserts (59) also being formed on the supporting structure (61) during the production thereof.

2. Method according to claim 1, wherein a starting body (31) is provided as part of the supporting structure (61) to be constructed, which starting body is arranged at one of the two support points (63, 65) or between the two support points (63, 65) of the existing structure (67) at the start of the erection of the supporting structure (61), and the 3D welding robot (5) builds up the supporting structure (61) starting from the starting body (31).

3. Method according to either claim 1 or claim 2, wherein the portion of the supporting structure (61) that is produced first during the erection phase is fixed to the existing structure (67) by means of a fixing device (69).

4. Method according to any of claims 1 to 3, wherein the 3D welding robot system (1) comprises a 3D scanner (85) and at least one reference mark (87), which reference mark (87) is arranged at one of the two support points (63, 65), wherein the 3D scanner (85), continuously or at discrete time intervals, records the contours of the supporting structure (61) produced during the erection, together with the reference mark (87), and forwards them to the controller (9) as actual data (91), and wherein corrections can be made to the welding operations (A, B, C, D) of the 3D welding robot (5) that are specified by the 3D robot control software (105) by processing the actual data (91) in the controller (9).

5. Method according to claim 4, wherein a further reference mark (87) is arranged at the other of the two support points (63, 65) and the further reference mark (87) is also recorded by the 3D scanner (85).

6. Method according to any of claims 1 to 5, wherein the 3D welding robot system (1) comprises a guide device (3) which can be set up temporarily and is arranged between the two support points (63, 65) during the production of the supporting structure (61) and on which the traveling device (21) is guided.

7. Method according to any of claims 1 to 5, wherein, during the production of the supporting structure (61), a track (33) is also formed thereon that is used to guide the traveling device (21).

8. Method according to any of claims 1 to 7, wherein, during the production of the supporting structure (61), receptacles (55) for tensioning elements (53) are also formed thereon and, at least after the production of the receptacles (55), the tensioning elements (53) are arranged and tensioned between the receptacles (55).

9. Method according to any of claims 1 to 8, wherein the already produced portion of the supporting structure (61) is supported in the structure (67) by means of supports (95) and/or suspension devices (79, 81) during the production.

10. Method according to claim 9, wherein the supports (95) and/or suspension devices (79, 81) are produced by the 3D welding robot (5) as an integral component of the completed supporting structure (61), or, provided as additional components, are integrally joined to the already produced portion of the supporting structure (61) by the 3D welding robot (5).

11. Method according to any of claims 1 to 10, wherein a supporting structure (61) designed as a metal reinforcement (97) is produced by means of the 3D welding robot system (1) and the regions thereof acting as the metal reinforcement (79) are at least partially enclosed by a concrete mass (99).

12. Method according to claim 11, wherein a deposition welding module (25) on the 3D welding robot (5) is replaced by a concrete printer module (27) and concrete mass (99) which can be processed by means of the concrete printer module (27) is arranged on the supporting structure (61) so as to at least partially enclose the metal reinforcement (97).

13. Method according to any of claims 1 to 12, wherein the topology of the supporting structure (61) digitally mapped by the component model data set (103) is optimized in terms of its strength, mass and design using a 3D finite element method, taking into account a biomimicry approach.

14. Passenger transport system (199) which is configured as an escalator or moving walkway, **characterized in that** it comprises a supporting structure (61) manufactured according to any of the methods 1 to 13 and other components of the passenger transport system (199) that are statically or movably arranged in this supporting structure (61).

## Revendications

1. Procédé permettant la construction d'une structure porteuse (61) d'une installation de transport de personnes (199) conçue comme un escalier roulant ou un trottoir roulant, dans lequel la structure porteuse (61) est construite au moyen d'une installation de robot de soudage 3D (1) entre deux points d'appui (63, 65) d'une structure (67) existante, dans lequel l'installation de robot de soudage 3D (1) présente au moins un appareil de commande (9) comportant un logiciel de commande de robot 3D (105), un dispositif de déplacement (21) comportant un robot de soudage 3D (5) et un dispositif d'alimentation en matériau de soudage (7), **caractérisé en ce qu'**un jeu de données de modèle de composant (103) représentant de manière numérique la structure porteuse (61) à construire est converti en opérations de soudage (A, B, C, D) au moyen du logiciel de commande de robot 3D (105), lesquelles opérations de soudage sont à réaliser par le robot de soudage 3D (5) pendant la phase de construction de la structure porteuse (61), dans lequel, pendant la phase de construction, la structure porteuse (61) est générée par application de matériau de soudage entre les deux points d'appui (63, 65) au moyen de l'installation de robot de soudage 3D (1), et dans lequel, lors de la génération de la structure porteuse (61), des zones de fixation (57) pour d'autres composants de l'installation de transport de personnes (199) et/ou des lits pour des inserts de rails de guidage (59) sont également formés sur celle-ci.

2. Procédé selon la revendication 1, dans lequel un corps de départ (31) est présent en tant que pièce de la structure porteuse (61) à construire, lequel est disposé, au début de la construction de la structure porteuse (61), sur l'un des deux points d'appui (63, 65) ou entre les deux points d'appui (63, 65) de la structure (67) existante et dans lequel le robot de soudage 3D (5) construit la structure porteuse (61) en commençant sur le corps de départ (31).

3. Procédé selon la revendication 1 ou 2, dans lequel la section de la structure porteuse (61) produite en premier pendant la phase de construction est fixée au moyen d'un dispositif de fixation (69) sur la structure (67).

4. Procédé selon l'une des revendications 1 à 3, dans lequel l'installation de robot de soudage 3D (1) comprend un scanner 3D (85) et au moins un marquage de référence (87), lequel marquage de référence (87) est disposé sur l'un des deux points d'appui (63, 65), dans lequel le scanner 3D (85) détecte en continu ou selon des intervalles temporels discrets les contours de la structure porteuse (61) créés pendant la construction conjointement avec le marquage de référence (87) et les transmet à l'appareil de commande (9) en tant que données réelles (91) et dans lequel, au moyen d'un traitement des données réelles (91) dans l'appareil de commande (9), des corrections peuvent être réalisées sur les opérations de soudage (A, B, C, D) du robot de soudage 3D (5) prédéfinies par le logiciel de commande de robot 3D (105).

5. Procédé selon la revendication 4, dans lequel un autre marquage de référence (87) est disposé sur l'autre des deux points d'appui (63, 65) et l'autre marquage de référence (87) est détecté conjointement par le scanner 3D (85).

6. Procédé selon l'une des revendications 1 à 5, dans lequel l'installation de robot de soudage 3D (1) comprend un dispositif de guidage (3) pouvant être installé temporairement, lequel est disposé pendant la génération de la structure porteuse (61) entre les deux points d'appui (63, 65) et vers lequel le dispositif de déplacement (21) est guidé.

7. Procédé selon l'une des revendications 1 à 5, dans lequel, lors de la génération de la structure porteuse (61), une voie de déplacement (33) est également formée sur celle-ci, laquelle voie sert au guidage du dispositif de déplacement (21).

8. Procédé selon l'une des revendications 1 à 7, dans lequel, lors de la génération de la structure porteuse (61), des logements (55) pour des éléments de tension (53) sont également formés sur celle-ci et, au moins après la génération des logements (55), les éléments de tension (53) sont disposés et tendus entre les logements (55).

9. Procédé selon l'une des revendications 1 à 8, dans lequel, pendant la génération, la section déjà générée de la structure porteuse (61) est soutenue dans la structure (67) à l'aide d'étais (95) et/ou de dispositifs de suspension (79, 81).

10. Procédé selon la revendication 9, dans lequel les étais (95) et/ou les dispositifs de suspension (79, 81) sont générés en tant que parties intégrantes de la structure porteuse (61) terminée par le robot de soudage 3D (5) ou sont fournis en tant que composants supplémentaires et reliés par complémentarité de matière à la section déjà générée de la structure porteuse (61) par le robot de soudage 3D (5).

11. Procédé selon l'une des revendications 1 à 10, dans lequel, à l'aide de l'installation de robot de soudage 3D (1), une structure porteuse (61) formée sous forme d'armature métallique (97) est générée et dont les zones servant d'armature métallique (79) sont entourées au moins partiellement par une matière de béton (99).

12. Procédé selon la revendication 11, dans lequel un module de soudage par application (25) est remplacé par un module d'impression de béton (27) sur le robot de soudage 3D (5) et, à l'aide du module d'impression de béton (27), une matière de béton (99) pouvant être traitée est disposée sur la structure porteuse (61) de manière à entourer au moins partiellement l'armature métallique (97).

13. Procédé selon l'une des revendications 1 à 12, dans lequel la structure porteuse (61) représentée de manière numérique par le jeu de données de modèle de composant (103) est optimisée en ce qui concerne sa résistance, sa masse et sa conception en utilisant une méthode des éléments finis 3D en tenant compte d'une approche de biomimétisme dans sa topologie.

14. Installation de transport de personnes (199) qui est conçue comme un escalier roulant ou un trottoir roulant, **caractérisée en ce que** celle-ci présente une structure porteuse (61) fabriquée selon un procédé 1 à 13, ainsi que d'autres composants de l'installation de transport de personnes (199) disposés de manière statique ou mobile dans ladite structure porteuse (61).
